# EUROPÄISCHE PATENTANMELDUNG

(11) **EP 3 505 260 A1**
(43) Veröffentlichungstag der Anmeldung: **03.07.2019**
(21) Anmeldenummer: 18213714.1
(22) Anmeldetag: 18.12.2018
(51) Int. Cl.: B05D 1/10, B05D 3/04, B05D 3/02, B05D 7/14

(54) **VERFAHREN UND VORRICHTUNG ZUM VERSIEGELN EINES FÜGESPALTS**

(30) Priorität: 28.12.2017 DE 102017131397
(71) Anmelder: RAantec GmbH & Co.KG, 33829 Borgholzhausen (DE)
(72) Erfinder: HARTMANN, Uwe, 32805 Horn Bad Meinberg (DE); PRÖSTLER, Karl-Heinz, 97261 Güntersleben (DE); JAHN, Ansgar, 49176 Hilter (DE)
(74) Vertreter: Kleine, Hubertus

(57) **Zusammenfassung**

Die Erfindung betrifft ein Verfahren zum Versiegeln eines Fügespalts (5) zwischen miteinander gefügter Elementen, von denen zumindest eines ein Blech (1, 2) ist, durch Aufbringen einer Fügespaltversiegelung (6). Das Verfahren weist die folgenden Schritte auf:
- Vorwärmen eines Bereichs der gefügten Elemente, auf die die Fügespaltversiegelung (6) aufgebracht werden soll;
- Einbringen von Polymerpulver in einen Plasmastrahl zur Bildung eines Plasma- und Pulverstrahls (29), der auf den vorgewärmten Bereich der Elemente gerichtet ist;
- Abscheiden von in dem Plasma- und Pulverstrahl (29) aufgeschmolzenen Polymerpartikeln als Fügespaltversiegelung (6).

Die Erfindung betrifft weiterhin eine Vorrichtung mit einer Vorbereitungszone (10) zur Erwärmung eines Bereichs der gefügten Elemente und einer Behandlungszone (20) mit einer Plasmadüse (21) und einer Pulverzufuhr (28) zur Erzeugung eines Plasma- und Pulverstrahls (29), wobei die Vorrichtung zur Durchführung eines derartigen Verfahrens eingerichtet ist.

## Beschreibung

Die Erfindung betrifft ein Verfahren und eine Vorrichtung zum Versiegeln eines Fügespalts zwischen miteinander gefügten Elementen, von denen zumindest eines ein Blech ist, durch Aufbringen einer Fügespaltversiegelung.

Insbesondere beim Karosseriebau in der Fahrzeugindustrie besteht die Notwendigkeit, miteinander gefügte Elemente, z.B. zwei miteinander gefügte Bleche, im Verbindungsbereich zu versiegeln und dadurch abzudichten. Türen, Klappen oder andere Karosserieelemente, die einen Hohlraum aufweisen, werden in der Regel aus zwei oder mehr in einem Stanz- und Prägeprozess geformten Blechelementen hergestellt. Die Blechelemente liegen in der Regel umlaufen aufeinander und werden entlang ihres Überlappungsbereichs miteinander verbunden. Eine Fügeverbindung kann beispielsweise über eine Schweißnaht, über eine Anordnung von Schweißpunkten oder über eine Klebeverbindung erfolgen.

Häufig ist der Verbindungsbereich nach Art eines Falzes ausgebildet, d.h. dass die Kanten zweier Bleche nicht übereinander liegen, sondern eines der Bleche mit seiner Kante auf der Fläche des anderen Blechs aufliegt. Die Verbindung kann durch Umschlagen des unterliegenden Blechs auch als Doppelfalz ausgebildet sein. Je nach Art der Fügeverbindung können die Bleche beschichtet sein, z. B. verzinkt oder mit einer kathodischen Tauchlackierung versehen.

In einer üblichen Praxis wird der im Verbindungsbereich, also im Falzbereich bzw. Nahtbereich entstehende Fügespalt versiegelt, beispielsweise indem ein typischerweise pastös zu verarbeitendes Dichtmaterial, beispielsweise auf PVC-Basis (Polyvinylchlorid) in Form einer Raupe auf den Nahtbereich aufgetragen wird. Meist überdeckt die Naht einen Randbereich des oberen Blechs um einige Millimeter (mm) und ragt ebenso weit auf die Fläche des unterliegenden Blechs.

Eine derartige Fügespaltversiegelung dichtet die beiden Bleche im Übergangsbereich oberflächlich ab, ist aber aufgrund seiner Konsistenz nicht in der Lage, in einen Spalt zwischen den Blechen einzudringen. Durch Alterungsprozesse, beispielsweise durch thermische Wechselbelastung, durch mechanische Belastung (z.B. Vibrationen) oder durch Versprödung, können sich im Anlagebereich zwischen dem Blech und dem Versieglungsmaterial Mikrorisse ausbilden, durch die Feuchtigkeit eindringt und sich durch Kapillarwirkung im Spalt zwischen den beiden Blechen anlagert. Dort angesammelte Feuchtigkeit kann im Laufe der Zeit trotz einer eventuellen Beschichtung der Bleche zu einer Korrosion führen.

Es ist eine Aufgabe der vorliegenden Erfindung ein Verfahren und eine Vorrichtung anzugeben, mit der eine besonders korrosionsschützende und langlebige Fügespaltversiegelung erstellt werden kann.

Diese Aufgabe wird durch ein Verfahren und eine Vorrichtung mit den Merkmalen des jeweiligen unabhängigen Anspruchs gelöst. Vorteilhafte Ausgestaltung und Weiterbildungen sind Gegenstand der abhängigen Ansprüche.

Ein erfindungsgemäßes Verfahren zum Versiegeln eines Fügespalts umfasst die folgenden Schritte: Es wird ein Bereich der gefügten Elemente, auf die die Fügespaltversiegelung aufgebracht werden soll, vorerwärmt. Weiter wird Polymerpulver in einen Plasmastrahl eingebracht, um einen Plasma- und Pulverstrahl zu bilden, der auf den vorgewärmten Bereich der Elemente gerichtet ist. In dem Plasma- und Pulverstrahl aufgeschmolzene Polymerpartikel werden als Fügespaltversiegelung abgeschieden.

Erfindungsgemäß wird somit ein Plasmastrahl eingesetzt, mit dem Polymerpartikel auf die gefügten Elemente abgeschieden werden, aus denen die Fügespaltversiegelung gebildet wird. Das in den Plasmastrahl eingebrachte Polymerpulver nimmt im Plasmastrahl eine teigige Konsistenz an, die zu einer guten Anhaftung der aufgebrachten Polymerpartikel auf den gefügten Elementen im Bereich des Fügespalts führt. In Verbindung mit der Vorerwärmung des Bereichs, auf den die teigigen Polymerpartikel aufgebracht werden, führt der Energieeintrag des Plasmastrahls in diesem Bereich zu einem Aufschmelzen der abgeschiedenen Polymerteilchen, durch die ein Schmelzbad bzw. bei einem Vorschub zwischen dem Plasma- und Polymerstrahl und den gefügten Elementen eine Schmelzraupe entsteht. Im Schmelzbad bzw. der Schmelzraupe nimmt das abgeschiedene Polymer eine den Fügespalt ausfüllende Konsistenz an. Es entsteht so eine Fügespaltversieglung, die in den Fügespalt eindringt und eine Korrosion des Fügespalts von innen her verhindert.

Da sich der abdichtende Teil der Versiegelung maßgeblich im Fügespalt befindet, kann eine wirksame Versiegelung mit wenig Material erzeugt werden. Das führt gegenüber einer im Wesentlich außen auf dem Fügespalt angeordneten Versiegelung gemäß dem Stand der Technik zu einer deutlichen Material- und damit auch Kosten- und Gewichtseinsparung. Das erfindungsgemäße Verfahren ist weiterhin kompatibel mit üblicherweise eingesetzten Automatisierungs- und Prozessabläufen und kann daher gut in bereits bestehende Abläufe integriert werden.

Bevorzugt wird nicht-thixotropes Polymerpulver z.B. mit einem reaktiven Polymergemisch verwendet. Insbesondere wird ein Lackpulver als ein solches nicht-thixotropes Polymerpulver eingesetzt, beispielsweise ein 2-Komponenten Lackpulver. Nicht-thixotropes Polymer ist in seiner temporär verflüssigten Form "spaltgängig", d.h. von seinen Fließeigenschaften her geeignet, in den Fügespalt einzudringen. Gerade derartige nicht-thixotrope Polymermaterialien sind aber in Form von aufgetragenen Pasten oder dergleichen nicht oder nur sehr schwer dosier- und verarbeitbar, da sie beispielsweise Fäden ziehen. In dem erfindungsgemäßen Verfahren, in dem das Polymerpulver in den Plasmastrahl appliziert wird, können jedoch auch derartige nicht-thixotrope Polymerpulver verarbeitet werden. Insbesondere wenn 2-Komponenten-Lackpulver als Polymerpulver eingesetzt wird, bevorzugt das Lackpulver, das auch in einer nachfolgenden Lackierung der gefügten Elemente eingesetzt wird, ist eine gute Verträglichkeit der Fügespaltversieglung und der nachfolgenden Lackierung und damit eine gute Überlackierbarkeit der Fügespaltversieglung gegeben.

In einer vorteilhaften Ausgestaltung des Verfahrens weist das Polymerpulver eine mittlere Partikelgröße von 20-50 Mikrometer (µm) auf. In dieser Partikelgröße kann das Polymerpulver gut in den Plasmastrahl eingebracht werden und nimmt die gewünschte teigige Konsistenz im Strahl an. Ggf. können Aufschäumzusätze hinzugefügt werden, die die Fügespaltversiegelung flexibel und nicht spröde machen.

In einer weiteren vorteilhaften Ausgestaltung des Verfahrens wird der Plasmastrahl mit einer Plasmadüse erzeugt, die mit einer Energie von weniger als etwa 1 Kilowatt (kW) betrieben wird. Die Plasmadüse erzeugt weiter bevorzugt einen Plasma- und Pulverstrahl, der im vorgewärmten Bereich der gefügten Elemente einen Durchmesser von weniger als 6 mm und bevorzugt von weniger als 4 mm aufweist. Der genannte Energiebereich der Plasmadüse führt zu der gewünschten Erwärmung des Polymerpulvers sowohl innerhalb des Plasma- und Pulverstrahls als auch in dem Schmelzbad bzw. der Schmelzraupe, die auf den gefügten Elementen entsteht.

In einer weiteren vorteilhaften Ausgestaltung des Verfahrens erfolgt die Vorerwärmung in dem Bereich, in dem die Fügespaltversiegelung aufgebracht wird, auf eine Temperatur von etwa 80-150 °C. Sie wird bevorzugt punktuell vorgenommen, beispielsweise mit Hilfe eines Laserstrahls oder eines fokussierten Lichtstrahls. Alternativ ist auch eine induktive Vorerwärmung möglich, die ebenfalls lokal (punktuell) vorgenommen werden kann und vorteilhaft Oberflächen der Elemente nicht verändert.

In einer weiteren vorteilhaften Ausgestaltung des Verfahrens trifft der Plasma- und Pulverstrahl schräg zu einer Oberfläche des mindestens einen Blechs auf dieses auf. Durch eine schräge Ausrichtung des Plasma- und Pulverstrahls kann das entstehende Schmelzbad bzw. die entstehende Schmelzraupe gezielt über dem zu versiegelnden Fügespalt an der Kante des mindestens einen Blechs gebildet werden, so dass ein optimales Eindringen in den Fügespalt gegeben ist.

In einer weiteren vorteilhaften Ausgestaltung des Verfahrens wird die aufgebrachte Fügespaltversiegelung nacherwärmt. Dieses kann beispielsweise durch einen Warmluftstrom, aber auch durch eine induktive Erwärmung erfolgen. Weiter ist es denkbar, die Nacherwärmung in einem Ofen vorzunehmen, beispielsweise auch in Form eines Teils eines nachfolgenden Lackierprozesses. Die Nacherwärmung härtet die entstandene Fügespaltversiegelung aus und stellt damit die gewünschte endgültige Zähigkeit des verwendeten Polymers ein.

In einer weiteren vorteilhaften Ausgestaltung des Verfahrens wird dieses als ein kontinuierlicher Prozess durchgeführt, bei dem sich die gefügten Elemente relativ zur Plasmadüse bewegen. Auf diese Weise wird eine durchgehend abdichtende Fügespaltversiegelung erstellt.

Ein erfindungsgemäße Vorrichtung zum Aufbringen einer Fügespaltversiegelung zur Versiegelung miteinander gefügter Elemente, von denen zumindest eines ein Blech ist, weist eine Vorbereitungszone zur Erwärmung eines Bereichs der gefügten Elemente und eine Behandlungszone mit einer Plasmadüse und einer Pulverzufuhr zur Erzeugung eines Plasma- und Pulverstrahls auf. Die Vorrichtung ist zur Durchführung eines zuvor genannten Verfahrens eingerichtet. Es ergeben sich die im Zusammenhang mit dem Verfahren genannten Vorteile.

Die Erfindung wird nachfolgend anhand von Ausführungsbeispielen mit Hilfe von Figuren näher erläutert. Die Figuren zeigen:
- Fig. 1: eine schematische Seitenansicht einer Vorrichtung zum Aufbringen einer Fügespaltversiegelung;
- Fig. 2: eine schematische Schnittdarstellung einer Anordnung zweiter Bleche mit einer anmeldungsgemäßen Fügespaltversiegelung; und
- Fig. 3: die Schnittdarstellung der Fig. 2 mit einer schematischen Angabe von Richtungen und Größen verschiedener Behandlungs- und Beschichtungsstrahlen.

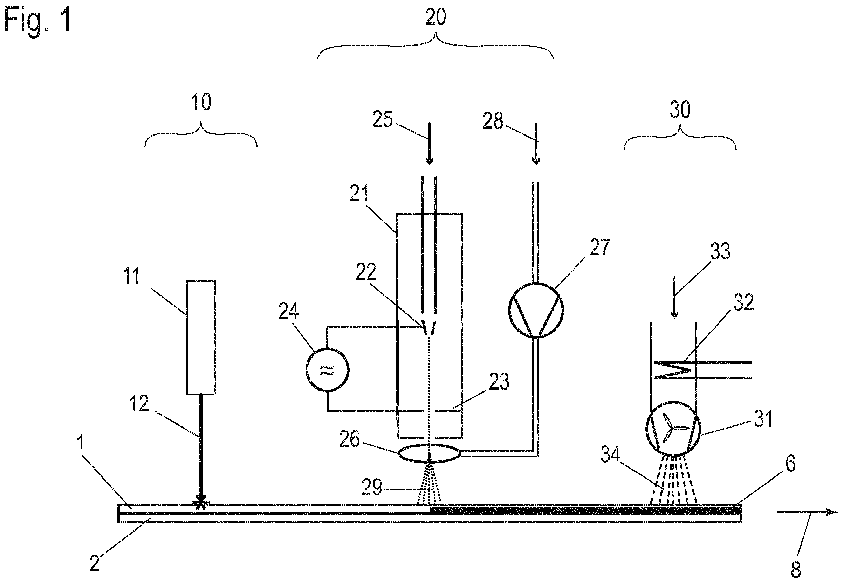

In Fig. 1 ist eine Vorrichtung zum Aufbringen einer Fügespaltversiegelung in einem Ausführungsbeispiel schematisch dargestellt. Die Figur zeigt die Vorrichtung in einer Seitenansicht, wobei einige Elemente zur Veranschaulichung ihres inneren Aufbaus geschnitten dargestellt sind.

Mit der Vorrichtung wird eine gefügte Anordnung von mindestens zwei aufeinanderliegenden Blechen, einem ersten Blech 1 und einem darauf angeordneten zweiten Blech 2 verarbeitet. Zu diesem Zweck bewegt sich die Anordnung der beiden Bleche 1, 2 relativ zu der Vorrichtung, wie dieses durch einen Bewegungspfeil 8 angegeben ist. Der Bewegungspfeil 8 gibt eine Vorschubrichtung der Anordnung der beiden Bleche 1, 2 gegenüber der Vorrichtung an. In einer alternativen Ausgestaltung kann die Vorrichtung anstelle der Anordnung bewegt werden.

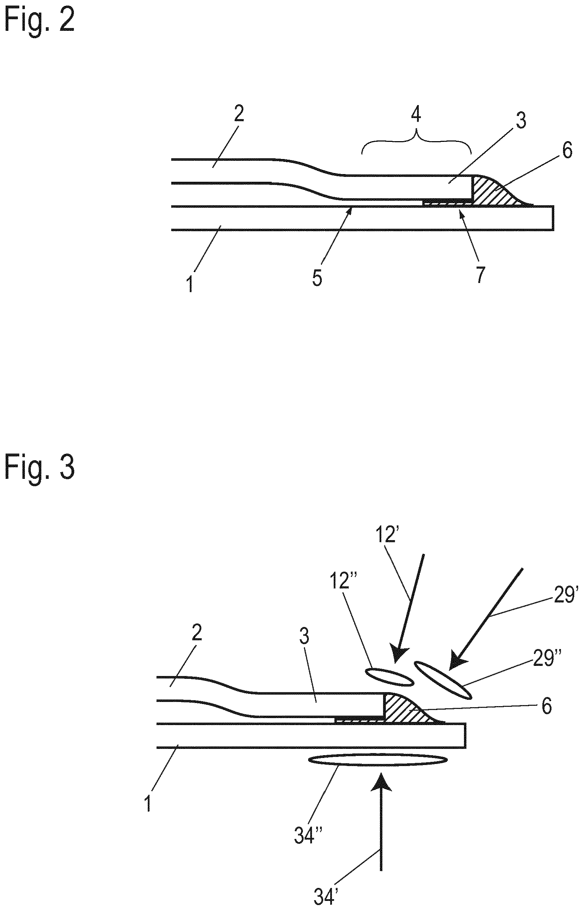

Die von der Vorrichtung verarbeitete Anordnung der Bleche 1, 2 ist beispielhaft in einem Schnittbild in der Fig. 2 dargestellt. Der Schnitt ist in einer Ebene senkrecht zur Darstellungsebene der Fig. 1 ausgeführt. Er zeigt das erste, in der Fig. 2 untere Blech 1, auf das das zweite, in der Figur obere Blech 2 gefügt ist. Eine Kante 3 des zweiten Blechs liegt dabei auf einer Fläche des ersten Blechs 1, so dass ein Falz gebildet ist. Die beiden Bleche sind in einem Überlappungsbereich 4, in dem sie aufeinander liegen, durch die genannte Fügung miteinander verbunden, beispielsweise sind sie miteinander verklebt oder geschweißt. Eine insbesondere in der Fahrzeugindustrie häufig verwendete Fügemethode stellen Punktschweißverbindungen im Überlappungsbereich 4 dar. Unvermeidlich ist dabei - insbesondere in einem zwischen den Punktschweißverbindungen liegenden Bereich - das Auftreten eines Fügespalts 5 im Überlappungsbereich 4. In diesen Fügespalt 5 eindringende Feuchtigkeit kann zur Korrosion der beiden Bleche 1, 2 führen, insbesondere im Überlappungsbereich 4.

Die Vorrichtung der Fig. 1 weist als zentrales Element eine Beschichtungszone 20 auf, in der Material zur Ausbildung einer Fügespaltversiegelung 6, nachfolgend abgekürzt auch als Versieglung 6 bezeichnet, aufgebracht wird.

Die Beschichtungszone 20 umfasst eine Plasmadüse 21, die eine Plasmaentladung zwischen zwei Elektroden, beispielhaft hier einer Kathode 22 und einer hier ringförmigen Anode 23 ausbildet. Gespeist wird die Plasmaentladung durch einen elektrischen Generator 24, der bevorzugt als Wechselspannungsgenerator, insbesondere als Hochfrequenz-Generator, ausgebildet ist.

Die Plasmadüse 21 ist mit einer Gaszufuhr 25 verbunden, durch die beispielsweise Stickstoff als Plasmagas zugeführt wird.

Einem in der Plasmadüse 21 erzeugten Plasmastrahl wird nach seiner Entstehung in einer nachgeordneten Pulverdüse 26 pulverförmiges Polymermaterial zugeführt, das zur Bildung der Versiegelung 6 verwendet wird. Die Pulverdüse 26 ist zu diesem Zweck mit einer Pulverpumpe 27 gekoppelt, die wiederum mit einer Pulverzufuhr 28 verbunden ist. Die Pulverzufuhr 28 kann beispielsweise durch ein Vorratsgefäß mit dem entsprechenden Pulver gespeist werden. Alternativ kann die Pulverdüse 26 auch innerhalb der Plasmadüse 21 angeordnet sein. Es wird auf diese Weise ein Plasma- und Pulverstrahl 29 gebildet, der auf die zu gefügten Elemente, hier die beiden Bleche 1, 2 auftrifft.

Die Besonderheiten des verwendeten Pulvers sowie spezielle Parameter der Betriebsführung der Plasmadüse 21 zum Aufbringen der Versieglung werden weiter unten näher erläutert.

Der Beschichtungszone 20 vorgelagert (gesehen in Vorschubrichtung der Bleche 1, 2) ist eine Vorbereitungszone 10 vorgesehen, in der eine lokale Erwärmung der Bleche 1, 2 in dem Bereich erfolgt, in dem die Versiegelung 6 aufgebracht werden soll.

Beim dargestellten Ausführungsbeispiel weist die Vorbereitungszone 10 einen Laser 11 auf, der die Bleche 1, 2 lokal mit einem Laserstrahl 12 erwärmt. geeignete Wellenlängen des Laserstrahls 12 liegen, z.B. im Bereich von 800 Nanometern (nm) bis 2500 nm. Alternativ zu dem Laserstrahl 12 kann auch ein fokussierter Lichtstrahl, insbesondere ein Infrarot (IR) - Lichtstrahl eingesetzt werden, der durch IR-Lichtquelle erzeugt wird.

Darüber hinaus können auch andere Verfahren zum lokalen Erwärmen der Bleche 1, 2 eingesetzt werden, beispielsweise ein induktives Aufheizen der Bleche 1, 2. Hierbei ist vorteilhaft, dass die erwärmten Oberflächen nicht oder nur sehr geringfügig verändert werden. Weiter alternativ kann auch ein (gesonderter) Plasmastrahl zur Vorerwärmung eingesetzt werden.

Weiter ist optional der Beschichtungszone 20 eine Nachbehandlungszone 30 nachgeordnet, in der eine großflächigere (vergleichen mit der Vorbereitungszone 10) Erwärmung der Bleche 1, 2 mit der aufgebrachten Versieglung 6 möglich ist. Beim dargestellten Ausführungsbeispiel umfasst die Nachbehandlungszone 30 einen Ventilator 31 mit einer zugeordneten Heizung 32. Der Ventilator 31 und Heizung 32 fördern bzw. erwärmen von einer Luftzufuhr 33 zugeführte Luft und erzeugen so einen auf die Bleche 1, 2 und die Versiegelung 6 gerichteten Warmluftstrom 34. Das Material der Versiegelung 6 wird zunächst passend zu gelatiniert und härtet dann aus. Ein Nahteinfall beim Aushärten wird durch das passende Gelatinieren begrenzt bzw. möglichst verhindert.

Die in der Fig. 1 dargestellte Anlage ist zur Verarbeitung einer 2-dimensionalen Struktur geeignet. Grundsätzlich kann bei entsprechender Zufuhr der gefügten Elemente und/oder entsprechender Verfahrbarkeit der Anlagenkomponenten (z.B. der Plasmadüse 21) auch eine 3-dimensionale Kontur der gefügten Elemente versiegelt werden.

Während aus dem Stand der Technik bekannt Fügespaltversiegelungen üblicherweise thixotrope pastöse Materialien einsetzten, wird bei einem anmeldungsgemäßen Verfahren und damit bei der anmeldungsgemäßen Vorrichtung ein nicht-thixotropes Polymerpulver als Material für die Versieglung 6 eingesetzt. Bevorzugt ist das Pulver ein Lackpulver, wobei vorteilhaft das Lackpulver eingesetzt wird, in dem die Bleche 1, 2 in einem späteren Verarbeitungsschritt (sowieso) lackiert werden. Damit ist eine Kompatibilität der verwendeten Beschichtungsmaterialen sichergestellt. Haftungsprobleme oder chemische Unverträglichkeiten zwischen der Versieglung 6 und einem nachfolgenden Lackauftrag werden sicher vermieden und eine gute Überlackierbarkeit der Versieglung 6 ist garantiert. Dabei kann dem Lackpulver ein Aufschäummittel zugesetzt sein, durch das die gebildete Versiegelung 6 weniger spröde ist und an Flexibilität gewinnt.

Durch die besondere Art der Aufbringung des Pulvers sowie der Vorbereitung und Behandlung der Bleche 1, 2 beim Aufbringen des Pulvers wird auch bei einem nicht-thixotropen (auch anti-thixotrop oder rheopex genannten) Fließverhalten des Pulvers eine zuverlässig abdichtende und langlebige Versieglung 6 erzielt.

Bei einem anmeldungsgemäßen Verfahren wird in der Vorbereitungszone 10 der Überlappungsbereich 4 der Bleche 1, 2 auf eine Temperatur zwischen etwa 80°C und 150°C, beispielsweise eine Temperatur von etwa 100°C, vorerwärmt. Die Vorerwärmung erfolgt lokal, bevorzugt im Bereich der Blechkante 3 des aufliegenden zweiten Blechs 2, beispielsweise punktuell in einem Punkt mit einem Durchmesser von etwa 6 mm. Durch den Vorschub der Bleche 1, 2 wird entsprechend eine linienförmige erwärmte Zone gebildet.

Auf den so vorgewärmten Bereich wird in der Beschichtungszone 20 der Plasma- und Pulverstrahl 29 gerichtet. Die Plasmadüse 21 wird dazu mit einer Energie von bis zu einem Kilowatt betrieben und es wird ein Beschichtungs-Durchmesser des Plasma- und Pulverstrahls 29 von etwa 2 bis 4 mm erreicht. Es wird angemerkt, dass die radiale Verteilung der Pulverpartikel im Plasma- und Pulverstrahl nicht homogen ist, sondern im Zentrum konzentriert ist. Der Plasma- und Pulverstrahl 29 erwärmt den bereits vorerwärmten Bereich der Bleche 1, 2 gleichzeitig beim Beschichten weiter, und zwar in einem Bereich, dessen Durchmesser mit z.B. 10 mm größer ist als der genannte Beschichtungs-Durchmesser von 2-4 mm.

Im Plasma- und Pulverstrahl 29 werden durch die dort vorherrschende Temperaturen die Pulverpartikel thermisch aufgeschmolzen und nehmen eine teigige Konsistenz an. Das zugeführte Pulver weist dazu bevorzugt Partikel mit einer mittleren Größe von 20-50 µm auf.

Die im Plasmastrahl teigig gewordenen Partikel weisen bereits anfänglich einen hohen Aufbringungswirkungsgrad von 50% bis über 80% auf, mit dem sie auf dem ersten Blech 1 bzw. zweiten Blech 2 haften.

Durch den kleinen Durchmesser des Plasma- und Pulverstrahls 29 kann eine Aufbringung selektiv im Bereich der Blechkante 3 sowie der überstehenden Fläche des ersten Blechs 1 erfolgen. Durch den Wärmeeintrag des Plasma- und Pulverstrahls 29 gelatiniert die sich aufbauende Versiegelung 6 bereits während des Abscheideprozesses und wird so eingestellt, dass Teile der Versiegelung 6 in Form einer passend langen Zunge 7 zwischen das erste und das zweite Blech 1, 2 eindringen, unterstützt durch die dort herrschende Kapillarwirkung. Zudem steigt der Aufbringungswirkungsgrad auf nahezu 100 % an, da eine Abscheidung der Pulverpartikel nunmehr in bereits flüssiges Material erfolgt.

Im Resultat entsteht eine Versieglung 6, wie sie im Querschnitt in Fig. 2 gezeigt ist: Gut haftend an der Blechkante 3 sowie der davor liegenden Fläche des ersten Blechs 1 und teilweise in den Fügespalt 5 zwischen den Blechen 1 und 2 eingedrungen.

Wie durch den Bewegungspfeil in Fig. 1 angezeigt, wird die Versiegelung 6 bevorzugt in einem kontinuierlichen Prozess aufgebracht. Dabei wird zu Prozessbeginn der Plasma- und Pulverstrahls 29 zunächst ohne Vorschub lokal auf einen Bereich gerichtet. Die genannten teigig gewordenen Pulverpartikel scheiden sich ab und werden durch den Wärmeeintrag des Plasma- und Pulverstrahls 29 weiter aufgeschmolzen. Es bildet sich ein schmelzflüssiges Polymerbad. Ist dieses Schmelzbad groß genug, wird der Beschichtungsfleck gezielt entlang der Blechkante 3 verfahren, so dass aus dem (runden) Schmelzbad eine längliche Schmelzraupe wird, die sich entlang der Blechkante 3 bewegt. Die Ausbildung des Schmelzbads bzw. der Schmelzraupe kann dabei durch Prozessparameter, insbesondere die Einstellung der Energie des Plasma- und Pulverstrahls 29, der Temperatur der Vorerwärmung und der Vorschubgeschwindigkeit, eingestellt werden.

In einer Ausgestaltung des Verfahrens kann die Form und Größe der Schmelzraupe auch überwacht werden, z.B. mithilfe von automatisch ausgewerteten Kamerabildern, wobei die Prozessparameter so angepasst werden, dass eine gewünschte Form und/oder Größe der Schmelzraupe eingehalten wird. Auf diese Weise können automatisch Abweichungen der Dicke der Bleche 1, 2 oder des Fügespalts 5 und/oder ein erhöhter Materialverbrauch des Polymerpulvers durch unterschiedlich tiefes Eindringen in den Fügespalt 5 ausgeglichen werden.

Während des Beschichtens wird durch den schmelzflüssigen Zustand des Polymers viel Wärme in beide Seiten des Fügespaltes 5 übertragen. Durch die Kapillarität der aufeinander liegende Bleche 1, 2 wird so eine gute Spaltverfüllung erreicht. Als nützlicher Nebeneffekt einer gezielten Beeinflussung der schmelzflüssigen Phase werden auch viele diffusionsgesteuerte Wechselwirkungen mit den Oberflächen und damit einen definierten Aufbau eines Haftungsverbundes erzielt.

Durch die optionale Wärmenachbehandlung in der Nachbehandlungszone 30 kann ein gezieltes Verlaufen und Einschmelzen von aufliegenden Pulverpartikeln in die Versiegelung 6 erfolgen. Durch den Wärmeeintrag in der Nachbehandlungszone wird das Gelatinieren beendet und das Polymer der Versiegelung 6 härtet aus und erhält seine endgültigen Eigenschaften, beispielsweise seine Zähigkeit.

Es wird angemerkt, dass die Bleche 1, 2 einschließlich der Versiegelung 6 in der Regel nach dem Aufbringen der Versiegelung 6 lackiert werden, wobei der Lackierprozess ein Aushärten der Lackierung in einem Ofen umfasst. Das Aushärten der Lackierung in dem Ofen kann die genannte optionale Wärmenachbehandlung darstellen.

Abgesehen von der Ausbildung einer gut haftenden Versiegelung 6 führt das beschriebene Verfahren dazu, dass so gut wie kein "overspray" erfolgt, also sich kein oder nur sehr wenig Material außerhalb des gewünschten Bereich auf den Blechen 1, 2 ablagert, wodurch auf einen nachfolgenden Reinigungsschritt zur Entfernung dieses überschüssigen Materials verzichtet werden kann. Die Nachbehandlung in der Nachbehandlungszone 30 wird bevorzugt mit Temperaturen von etwa 120°C durchgeführt.

Der beschriebene Prozess kann ggf. zwei- oder mehrfach durchlaufen werden, um ein noch tieferes Eindringen der Versiegelungszunge 7 in den Fügespalt 5 zu erreichen. Weiterhin bietet eine mehrfache Wiederholung des Prozesses die Möglichkeit, den sich außerhalb des Fügespalts 5 befindenden Teil der Versiegelung 6 in seiner 3-dimensionalen Form gezielt aufzubauen und/oder zu beeinflussen.

Fig. 3 zeigt die Skizze der Fig. 2 nochmals mit beispielhaften Richtungen 12', 29', 34' der verschiedenen Beschichtungs- und Behandlungsstrahlen bzw. - ströme und resultierenden Wirkungsbereich 12", 29", 34".

Dabei beziehen sich die Richtung 12' und der Wirkungsbereich 12" auf die Vorerwärmung, z.B. durch den Laserstrahl 12 oder einen entsprechenden fokussierten Lichtstrahl oder auch durch induktives Vorerwärmen. Die Wirkungsbereich 12" gibt in etwa die Größe und die Positionierung des vorerwärmten Bereichs der gefügten Elemente an.

Die Richtung 29' bezieht sich auf den Plasma- und Pulverstrahl 29. Der Wirkungsbereich 29" gibt in etwa die Größe und Positionierung des Bereichs an, in dem die teigig gewordenen Pulverpartikel auftreffen. Vorteilhaft ist eine Richtung 29' eingestellt, bei der der Plasma- und Pulverstrahl 29 schräg auf den zu verfüllenden Fügespalt 5 und die Blechkante 3 auftrifft.

Die Richtung 34' bezieht sich auf den Warmluftstrom 34 zur Nacherwärmung. Der Wirkungsbereich 34" gibt in etwa die Größe und Positionierung des nacherwärmten Bereichs an. Bei dem in Fig. 3 gezeigten Beispiel erfolgt (anders als in Fig. 1 dargestellt ist) die Nacherwärmung von der der Versieglung gegenüberliegenden Seite (Rückseite). Deutlich ist erkennbar, dass die Nacherwärmung in einem breiteren Abschnitt erfolgt als die eher lokale Vorerwärmung. Es wird angemerkt, dass auch die Vorerwärmung von der Rückseite her erfolgen kann.

### Bezugszeichen

- 1: erstes Blech
- 2: zweites Blech
- 3: Blechkante
- 4: Überlappungsbereich
- 5: Fügespalt
- 6: Fügespaltversiegelung
- 7: Zunge
- 8: Bewegungspfeil

- 10: Vorbereitungszone
- 11: Laser
- 12: Laserstrahl

- 20: Beschichtungszone
- 21: Plasmadüse
- 22: Kathode
- 23: Anode
- 24: Generator
- 25: Gaszufuhr
- 26: Pulverdüse
- 27: Pulverpumpe
- 28: Pulverzufuhr
- 29: Plasma- und Pulverstrahl

- 30: Nachbehandlungszone
- 31: Ventilator
- 32: Heizung
- 33: Luftzufuhr
- 34: Warmluftstrom

- 12', 29', 34': Richtung
- 12", 29", 34": Wirkungsbereich

## Patentansprüche

1. Verfahren zum Versiegeln eines Fügespalts (5) zwischen miteinander gefügter Elementen, von denen zumindest eines ein Blech (1, 2) ist, durch Aufbringen einer Fügespaltversiegelung (6) mit den folgenden Schritten:
- Vorwärmen eines Bereichs der gefügten Elemente, auf die die Fügespaltversiegelung (6) aufgebracht werden soll;
- Einbringen von Polymerpulver in einen Plasmastrahl zur Bildung eines Plasma- und Pulverstrahls (29), der auf den vorgewärmten Bereich der Elemente gerichtet ist;
- Abscheiden von in dem Plasma- und Pulverstrahl (29) aufgeschmolzenen Polymerpartikeln als Fügespaltversiegelung (6).

2. Verfahren nach Anspruch 1, bei dem zwei Bleche (1, 2) als Elemente miteinander gefügt sind.

3. Verfahren nach Anspruch 1 oder 2, bei dem nicht-thixotropes Polymerpulver, insbesondere Lackpulver, verwendet wird.

4. Verfahren nach Anspruch 4, bei dem als Polymerpulver Lackpulver verwendet wird, das Aufschäumzusätze enthält.

5. Verfahren nach einem der Ansprüche 1 bis 4, bei dem das Polymerpulver eine mittlere Partikelgröße von 20-50 µm aufweist.

6. Verfahren nach einem der Ansprüche 1 bis 5, bei dem der Plasmastrahl mit einer Plasmadüse (21) erzeugt wird, die mit einer Energie von weniger als etwa 1 kW betrieben wird.

7. Verfahren nach einem der Ansprüche 1 bis 6, bei dem der Plasma- und Pulverstrahl (29) im vorgewärmten Bereich der gefügten Elemente einen Durchmesser von weniger als 6 mm und bevorzugt von weniger als 4 mm aufweist.

8. Verfahren nach einem der Ansprüche 1 bis 7, bei dem die gefügten Elemente in dem Bereich, in dem die Fügespaltversiegelung (6) aufgebracht wird, auf eine Temperatur von etwa 80° C bis 150° C vorerwärmt werden.

9. Verfahren nach Anspruch 8, bei dem die Vorerwärmung punktuell vorgenommen wird.

10. Verfahren nach Anspruch 8 oder 9, bei dem zur Vorerwärmung ein Laserstrahl (12) oder ein fokussierter Lichtstrahl eingesetzt wird.

11. Verfahren nach Anspruch 8 oder 9, bei dem die Vorerwärmung induktiv erfolgt.

12. Verfahren nach einem der Ansprüche 1 bis 11, bei dem der Plasma- und Pulverstrahl (29) schräg zu einer Oberfläche des mindestens eines Blechs (1, 2) auf dieses auftrifft.

13. Verfahren nach einem der Ansprüche 1 bis 12, bei dem die aufgebrachte Fügespaltversiegelung (6) nacherwärmt wird.

14. Verfahren nach Anspruch 13, bei dem zur Nacherwärmung ein Warmluftstrom (34) eingesetzt wird.

15. Verfahren nach Anspruch 13, bei dem die Nacherwärmung in einem Ofen erfolgt, insbesondere als Teil eines Lackierprozesses.

16. Verfahren nach einem der Ansprüche 1 bis 15, durchgeführt als kontinuierlicher Prozess, bei dem sich die Bleche (1, 2) relativ zur Plasmadüse (21) bewegen.

17. Vorrichtung zum Aufbringen einer Fügespaltversiegelung (6) zur Versiegelung miteinander gefügter Elemente, von denen zumindest eines ein Blech (1, 2) ist, aufweisend eine Vorbereitungszone (10) zur Erwärmung eines Bereichs der gefügten Elemente und einer Behandlungszone (20) mit einer Plasmadüse (21) und einer Pulverzufuhr (28) zur Erzeugung eines Plasma- und Pulverstrahls (29), eingerichtet zur Durchführung eines Verfahrens nach einem der vorherigen Ansprüche.
